# EUROPEAN PATENT APPLICATION

(11) **EP 4 671 166 A1**
(43) Date of publication of application: **31.12.2025**
(21) Application number: 24773908.9
(22) Date of filing: 05.03.2024
(51) Int. Cl.: B65G 47/52, B65G 15/30, B65G 41/00

(54) **TRANSFER MACHINE**

(30) Priority: 20.03.2023 CN 202320619849 U
(71) Applicant: Sunwoda Mobility Energy Technology Co., Ltd., Shenzhen, Guangdong 518107 (CN)
(72) Inventor: WANG, Yuhao, Shenzhen, Guangdong 518107 (CN); PENG, Yuhui, Shenzhen, Guangdong 518107 (CN)
(74) Representative: Metida
(86) International application number: PCT/CN2024/080034
(87) International publication number: WO 2024/193340

(57) **Abstract**

A transfer device (100) comprises a support frame (10), a loading platform (20), a first limiting assembly (30), a second limiting assembly (40), and a lifting member (50). The loading platform (20) comprises a base plate (21), a support plate (22), a material belt (2), and a driving member (24). The first limiting assembly (30) comprises a sleeve (31) fixedly arranged on the base plate (21) and a limit post (32) extending through the sleeve (31). The second limiting assembly (40) comprises a slide rail (41) and a slider (42) slidably arranged on the slide rail (41). The slide rail (41) is parallel to the limit post (32). The lifting member (50) drives the loading platform (20) to move relative to the support frame (10). By the cooperation of the first limiting assembly (30) and the second limiting assembly (40), two different position-limiting structures simultaneously act on the loading platform (20) and thus achieve a multi-point limitation, preventing the loading platform (20) from tilting and vibrating during the lifting and lowering processes and ensuring conveying stability during the lifting of materials.

## Description

This application claims the benefit of the priority of Chinese Patent Publication No. CN219340835U, filed with China National Intellectual Property Administration on March 20, 2023, and entitled "Transfer Device", the contents of which are incorporated herein by reference.

### TECHNICAL FIELD

The application relates to the field of material conveying technology, more particularly to a transfer device.

### BACKGROUND

The material conveying technology mainly involves the process of conveying materials along predetermined paths by using conveyor belts. Due to the corners that are frequently provided in the laid-out paths, materials have to be redirected 90 degrees for conveying. This requires two conveyor belts arranged perpendicular to each other at different heights, together with a transfer device located at the corner between the two conveyor belts. The transfer device serves to lift the materials from the lower conveyor belt to the upper conveyor belt, thereby allowing for 90-degree redirection of the materials to meet conveying requirements.

Existing transfer devices typically employ pneumatic or hydraulic cylinders to drive the lifting and lowering movements of the loading platform, thereby achieving the lifting operation of the materials placed on the loading platform. However, as the materials loaded onto the loading platform are not necessarily positioned at the center of the loading platform, tilting and vibration or even overturning of the loading platform may occur during the lifting of heavier materials, resulting in poor stability in material conveying.

### SUMMARY

The application is to solve a technical problem of the poor stability of the transfer device in material conveying.

In order to solve the technical problem, the application provides a transfer device, comprising:
a support frame;
a loading platform, comprising a base plate, a support plate connected to the base plate, a material belt provided on the support plate, and a driving member connected to the material belt, wherein the driving member is configured to drive the material belt to rotate relative to the support plate, and the support plate is moveably arranged on the support frame, such that the loading platform is moveable in a first direction relative to the support frame;
a first limiting assembly, comprising a sleeve fixedly arranged on the base plate and a limit post extending through the sleeve, wherein the sleeve is slidably arranged on the limit post to limit a position of the loading platform moved relative to the support frame;
a second limiting assembly, comprising a slide rail and a slider slidably arranged on the slide rail, wherein the slide rail is parallel to the limit post, the slide rail is provided on either one of the support frame and the support plate, and the other one of the support frame and the support plate is connected to the slider, such that the slide rail and the slider constrain a movement path of the support plate relative to the support frame; and
a lifting member, connected to the base plate, wherein the lifting member is arranged along the first direction and is configured to drive the loading platform to move relative to the support frame in the first direction.

In an embodiment, the second limiting assembly may further comprise a mounting bracket, the mounting bracket may be connected to the support plate, and the slider may be connected and secured to the support plate via the mounting bracket.

In an embodiment, the mounting bracket may further comprise a connecting portion and an extending portion connected to the connecting portion; the connecting portion may have an elongated shape and may be connected to the support plate, the extending portion may have an elongated shape and extend from the connecting portion towards the support frame, a length direction of the extending portion may be perpendicular to a length direction of the connecting portion, and the mounting bracket may be T-shaped.

In an embodiment, the base plate may be shaped as a straight rectangular plate, a number of the support plates may be two, the two support plates may be arranged side by side on two sides of the base plate, the support plates may be perpendicular to the base plate, and the material belt may be mounted at an end of the support plate away from the base plate.

In an embodiment, at least two first limiting assemblies may be provided, which may be arranged at an interval along a direction of an extension plane of the base plate; a number of the second limiting assemblies may be the same as a number of the first limiting assemblies, and the second limiting assemblies may be arranged at intervals around the base plate.

In an embodiment, the base plate may be rectangular-shaped, a number of the first limiting assemblies may be four, the four first limiting assemblies may be respectively correspondingly disposed at four corners of the base plate and arranged in a rectangular array.

In an embodiment, the support frame may comprise supports arranged oppositely on two sides of the loading platform, and a crossbeam connected to adjacent supports, and the supports may be arranged in parallel to the support plate.

In an embodiment, the crossbeam may have an elongated shape and have two ends respectively connected and secured to the supports provided on the two sides.

In an embodiment, the supports may comprise support legs arranged oppositely on two sides and ribs connected to the support legs on the two sides, the support legs may have an elongated shape, the ribs may have an elongated shape and may be disposed between the support legs on the two sides, and a length direction of the ribs may be perpendicular to a length direction of the support legs.

In an embodiment, the slide rail may have an elongated shape and may be fixedly arranged on a side of the support legs close to the support plate, with a length direction of the slide rail being parallel to the length direction of the support legs.

In an embodiment, the support frame may further comprise support feet, which may be sleeved on outer sides of the support legs, respectively, and the support feet may be moveable relative to the support legs, respectively, to allow adjustment of depths of the support legs inserted in the support feet.

In an embodiment, the support feet may be arranged at bottom ends of the support legs and may be connected and secured to external construction site ground, the support feet and the support legs may be respectively fixedly connected by bolts, and heights of the supports may be adjustable by adjusting relative positions between the support feet and the support legs.

In an embodiment, a driving direction of the lifting member may be perpendicular to the base plate, the lifting member may be mounted on a side of the base plate away from the material belt and connected to a center portion of the base plate.

In an embodiment, the lifting member may be a pneumatic or hydraulic cylinder.

In an embodiment, the driving member may be a motor, which may be provided with an output shaft passing through the support plates on the two sides and connected to both material belts on the two sides.

Compared with existing technologies, the transfer device has advantages as follows.

By providing the sleeve and the limit post of the first limiting assembly to limit the lifting and lowering movements of the loading platform and providing the slide rail and the slider of the second limiting assembly to limit the lifting and lowering movements of the loading platform, the disclosure provides two different position-limiting structures that simultaneously act on the loading platform and thus achieves a multi-point limitation. It prevents the loading platform from tilting and vibrating during the lifting and lowering processes, thereby ensuring conveying stability during the lifting of materials.

### BRIEF DESCRIPTION OF THE DRAWINGS

FIG.1 is a schematic structural view of a transfer device according to an embodiment of the application;
FIG.2 is a schematic side view of the transfer device of FIG.1.
FIG.3 is a schematic top view of the transfer device of FIG.1.
FIG.4 is a schematic enlarged view of the portion in the circle A of FIG.1.

The reference signs shown in the figures are denoted as follows.
100. transfer device;
10. support frame; 11. supports; 12. crossbeam; 13. support feet; 15. support legs; 16. ribs;
20. loading platform; 21. base plate; 22. support plate; 23. material belt; 24. driving member;
30. first limiting assembly; 31. sleeve; 32. limit post;
40. second limiting assembly; 41. slide rail; 42. slider; 43. mounting bracket; 45. connecting portion; 46. extending portion;
50. lifting member.

### DETAILED DESCRIPTION OF ILLUSTRATED EMBODIMENTS

To make the purposes, features and advantages of application clearer, particular embodiments of the application are described in detail below in conjunction with the accompanying drawings. The particular implementations illustrated herein are intended to facilitate understanding of the application. However, the application can be implemented in many other ways different from those described herein. Those skilled in the art can obtain equivalents without deviating from the essence of the application. The particular examples disclosed below are not intended to limit the application.

It should be understood that the terms, such as "center", "longitudinal", "traverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" as used in the description, refer to position and orientation relationships as shown in the drawings for convenience of description and for the purpose of simplicity. They are not intended to indicate or hint a limitation in terms of specific orientation or configuration and operation with specific orientation to the described device or component, and should not be regarded as a limitation to the application.

In addition, the terms "first" and "second" are used for convenience of description and are not intended to indicate or imply relative importance or hint the quantity of features. Hence, components defined by the terms "first" and "second" are intended to indicate or hint one or more of such components. Unless explicitly stated otherwise, "plurality" as used in the description refers to two or more, for example, two, three, etc.

Unless defined or specified otherwise, the terms such as "mount", "connect", "attach", and "secure" used in the description are intended to have meanings commonly understood in a broad sense. For example, they may refer to fixedly connect, or detachably connect, or integrally connect; or mechanically connect, or electrically connect; or directly connect, or indirectly connect via an intermedium, or internally communicate between two components, or interaction between two components. The particular meanings of the terms used herein may be understood by those skilled in the art in accordance with specific conditions.

Unless defined or specified otherwise, the description that a first feature is located "above" or "below" a second feature as used herein, may indicate that the first and second features are directly contacted with each other, or the first and second features are indirectly contacted via an intermedium. Furthermore, the description that the first feature is located "on", "above" or "over" the second feature may indicate that the first feature is located right above or obliquely above the second feature, or merely indicate that the first feature is located at a position higher than the second feature. The description that the first feature is located "under", "below" or "beneath" the second feature may indicate that the first feature is located right below or obliquely below the second feature, or merely indicate that the first feature is located at a position lower than the second feature.

It should be noted that where a component is referred to as being "fixed on" or "arranged on" a further component, the component may be provided on the further component directly or via an intermediate component. Where a component is referred to as being "connected to" a further component, the component may be connected to the further component directly or via an intermediate component. The terms "perpendicular", "horizontal", "up", "down", "left", "right", and the like as used in the description are for purposes of explanation rather than limitation.

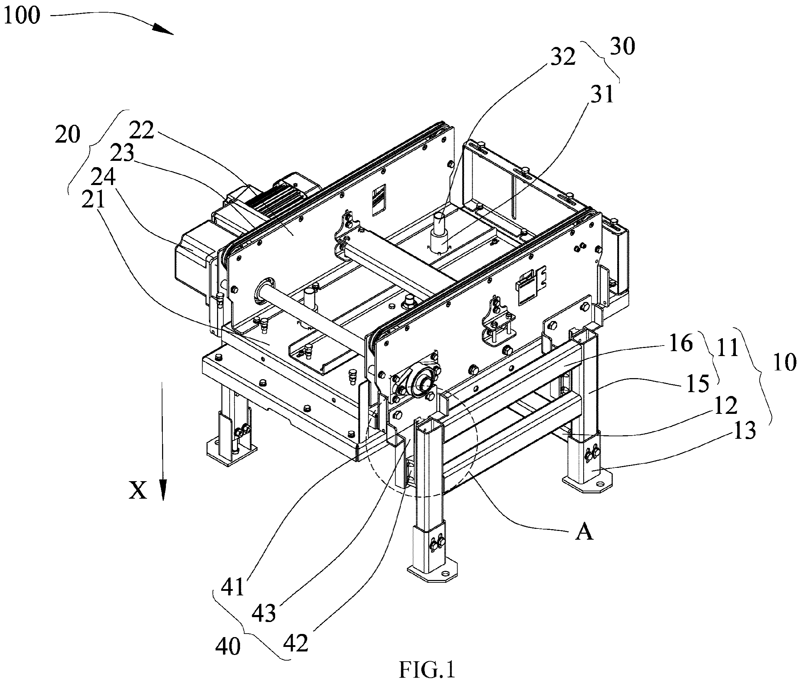

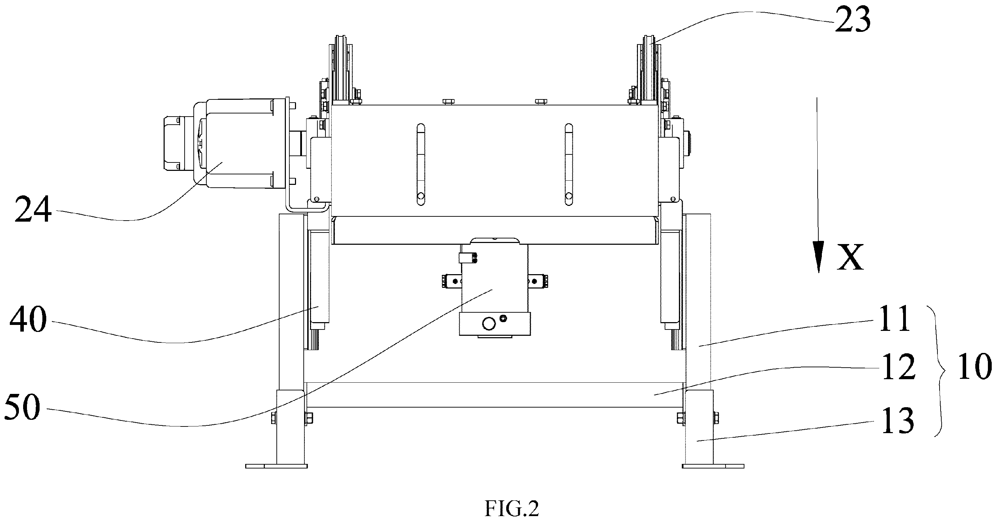

Referring to FIG.1 and FIG.2, it should be noted that the direction X is defined in the embodiment of the application. For purposes of illustration, the first direction is indicated by the direction X.

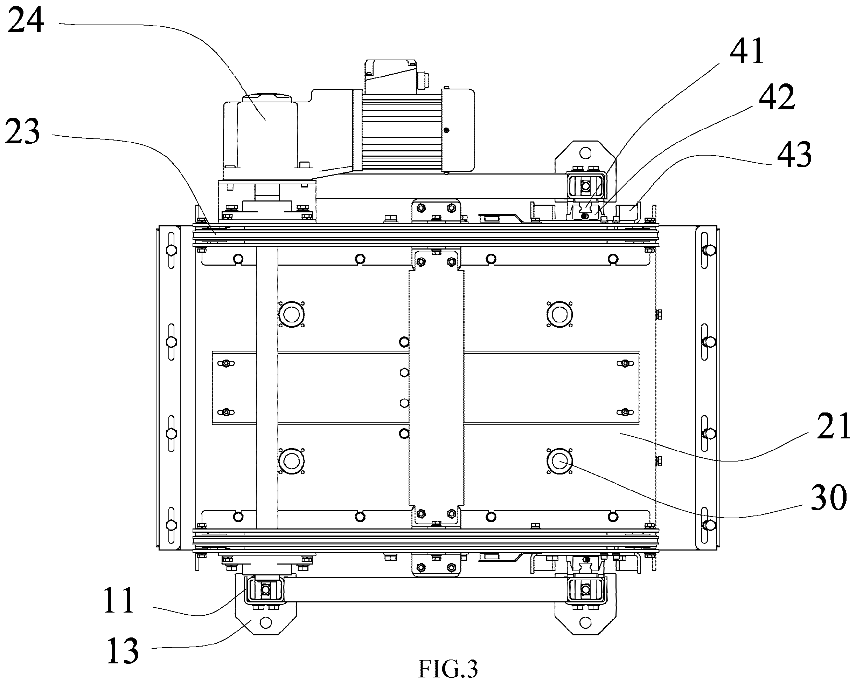

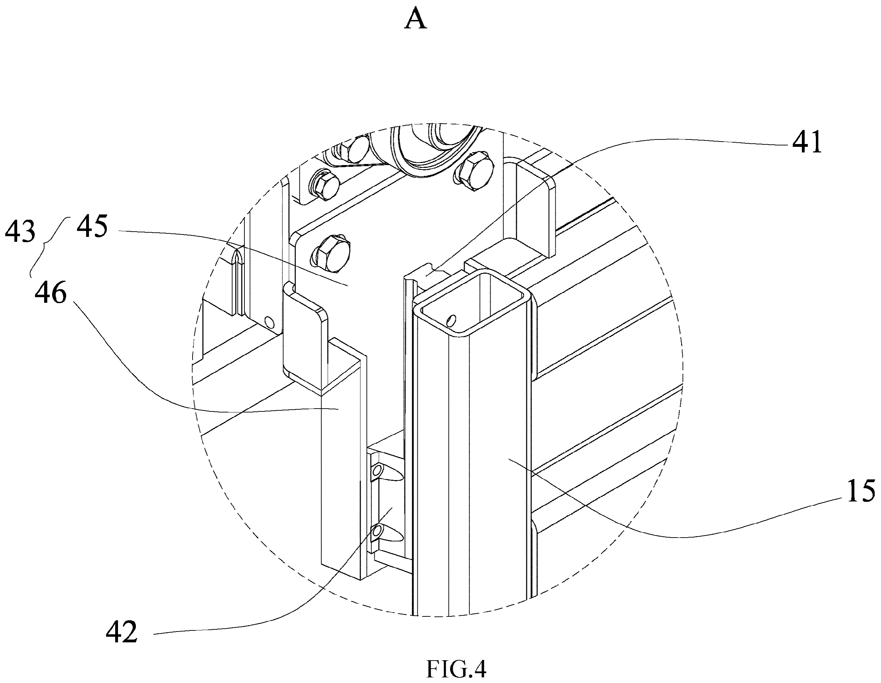

Please refer to FIGs.1-4. In an embodiment of the application, a transfer device 100 is provided, which comprises a support frame 10, a loading platform 20 slidably arranged on the support frame 10, a first limiting assembly 30 connected to the loading platform 20, a second limiting assembly 40 arranged between the support frame 10 and the loading platform 20, and a lifting member 50 connected to the loading platform 20. The loading platform 20 comprises a base plate 21, a support plate 22 connected to the base plate 21, a material belt 23 arranged on the support plate 22, and a driving member 24 connected to the material belt 23. The support plate 22 is moveably arranged on the support frame 10 in such a manner that the loading platform 20 is moveable in the first direction relative to the support frame 10. The driving member 24 serves to drive the material belt 23 to rotate relative to the support plate 22. The material belt 23 serves to receive the materials and convey the materials to a further external conveyor belt as the material belt 23 is driven to rotate by the driving member 24, thereby achieving redirection of the materials. The first limiting assembly 30 comprises a sleeve 31 fixedly arranged on the base plate 21 and a limit post 32 extending through the sleeve 31. The sleeve 31 is slidably arranged on the limit post 32 to limit the movement of the base plate 21 relative to the support frame 10. The second limiting assembly 40 is arranged between the support frame 10 and the support plate 22, and the second limiting assembly 40 comprises a slide rail 41 and a slider 42 slidably arranged on the slide rail 41. The slide rail 41 is parallel to the limit post 32. The slide rail 41 is provided on either one of the support frame 10 and the support plate 22, and the other one of the support frame 10 and the support plate 22 is connected to the slider 42. The slide rail 41 together with the slider 42 serve to constrain the movement path of the support plate 22 relative to the support frame 10. As both the first limiting assembly 30 and the second limiting assembly 40 work, two different position-limiting structures simultaneously act on the loading platform 20, thereby achieving a multi-point limitation. This enables the loading platform 20 to have the degree of freedom to move only in the lifting direction, thereby preventing tilting and vibration. The lifting member 50 is connected to the base plate 21. The lifting member 50 is arranged along the first direction, and is configured to drive the loading platform 20 to move relative to the support frame 10 in the first direction, so as to provide the driving force for the lifting and lowering movements of the loading platform 20.

The transfer device 100, which limits the lifting and lowering movements of the loading platform 20 by means of the sleeve 31 and the limit post 32 of the first limiting assembly 30 and further limits the lifting and lowering movements of the loading platform 20 by means of the slide rail 41 and the slider 42 of the second limiting assembly 40, provides two different position-limiting structures that simultaneously act on the loading platform 20 and thus achieves a multi-point limitation. It can prevent the loading platform 20 from tilting and vibrating during the lifting and lowering processes, thereby ensuring stability during the lifting and conveying of materials.

Furthermore, the support frame 10 is connected and secured to the external construction site ground and serves to support the entire device. The support frame 10 comprises supports 11 arranged oppositely on two sides of the loading platform 20, a crossbeam 12 connecting adjacent supports 11, and support feet 13 connected to the supports 11, respectively. The supports 11 are arranged along the first direction and serve to support the entire device. In the embodiment, the supports 11 comprise support legs 15 arranged oppositely on two sides and ribs 16 connecting the support legs 15 on the two sides. The support legs 15 have the elongated shape and are arranged along the first direction. The support legs 15 on two sides of a same support 11 are arranged in parallel. The ribs 16 have the elongated shape and are disposed between the support legs 15 on the two sides. Both ends of the ribs 16 are respectively connected and secured to the support legs 15 on the two sides. The length direction of the ribs 16 is perpendicular to the length direction of the support legs 15. The ribs 16 serve to improve the reliability of the connection between the support legs 15 on the two sides, thereby enhancing the stability of the supports 11. It can be understood that at least two ribs 16 may be provided on a same support 11, and the ribs 16 may be arranged along the length direction of the support legs 15 at an interval. In particular, two ribs 16 may be provided on the same support 11, and the two ribs 16 may be arranged side by side and spaced apart at the top end of the support legs 15.

Furthermore, the crossbeam 12 has the elongated shape and is arranged perpendicular to the support legs 15. The two ends of the crossbeam 12 are respectively connected and secured to the supports 11 provided on the two sides. The crossbeam 12 is disposed on a side of the support frame 10 and serves to enhance the reliability of the connection between the supports 11 provided on the two sides, and thus improve the stability of the support frame 10.

Furthermore, the support feet 13 are sleeved on the outer side of the support legs 15, respectively. The support feet 13 are arranged at the bottom ends of the support legs 15 and are connected and secured to the external construction site ground. The support feet 13 are moveable relative to the support legs 15, respectively, to allow adjustment of the depth of the support legs 15 inserted in the support feet 13. The support feet 13 and the support legs 15 are fixedly connected by bolts. By adjusting the relative positions between the support feet 13 and the support legs 15, the setting height of the supports 11 can be adjusted. In this way, it enables the adjustment and control of the lifting position of the loading platform 20 to meet usage demands at different heights and improve use adaptability. In the embodiment, the number of the support feet 13 may be four, and the four support feet 13 may be arranged in one-to-one correspondence with the four support legs 15, respectively.

Furthermore, the loading platform 20 is mounted at the top end of the support frame 10. It serves to receive the conveyed materials and transfer them to a conveyor belt in the changed direction, thereby achieving redirection conveying operation of the materials. The base plate 21 is shaped as a straight plate and is arranged perpendicular to the first direction. The base plate 21 is arranged between the supports 11 provided on the two sides and is arranged perpendicular to the supports 11. The support plates 22 are arranged to extend along the first direction. The number of the support plates may be two, and the two support plates 22 may be arranged side by side on the two sides of the base plate 21 when viewed perpendicular to the first direction. The support plates 22 are perpendicular to the base plate 21 and extend from the base plate 21 in a direction away from the support frame 10. The support plates 22 are arranged along a direction parallel to the supports 11, and the support plates 22 on the two sides are arranged corresponding to the supports 11 on the two sides, respectively. The material belt 23 is mounted at one end of the support plate 22 distal to the base plate 21. The material belt 23 has a long loop-shaped structure and is rotatable relative to the support plate 22. The material belt 23 serves to convey the materials. The driving member 24 is arranged on a side of the loading platform 20 and is fixed to the support plate 22 on one side. The driving member 24 is connected to the material belt 23 and serves to provide the torque required for the material belt 23 to rotate relative to the support plate 22. In the embodiment, the driving member 24 may be a motor. It may have an output shaft that passes through the support plates 22 on the two sides to connect to both of the material belts 23 on the two sides, thereby enabling the driving member 24 to synchronously drive and control the material belts 23 on the two sides.

Furthermore, the sleeve 31 is designed with a circular ring structure. The sleeve 31 is embedded into the base plate 21 and is connected and secured to the base plate 21. The limit post 32 is designed with a cylindrical structure and is arranged along the first direction. The limit post 32 correspondingly extends through the sleeve 31 and is connected and secured to the external element. When the loading platform 20 moves relative to the support frame 10, the sleeve 31 is driven to move along the limit post 32, thereby constraining the lifting and lowering movement path of the loading platform 20. In the embodiment, at least two first limiting assemblies 30 are provided, which are arranged at an interval along the direction of the extension plane of the base plate 21, so as to improve the stability of the lifting and lowering movements of the loading platform 20. In particular, the number of the first limiting assemblies 30 may be four. The four first limiting assemblies 30 may be respectively correspondingly disposed at the four corners of the base plate 21 that is rectangular-shaped, and arranged in a rectangular array.

Furthermore, the slide rail 41 has the elongated shape and is arranged along the vertical direction and parallel to the limit post 32. The slider 42 is designed with a rectangular block structure. The slide rail 41 is correspondingly embedded into the slider 42, and the slider 42 is moveable relative to the slide rail 41, thereby achieving the position limitation for the lifting and lowering movements of the loading platform 20. In the embodiment, the slide rail 41 is fixedly arranged on the side of each support leg 15 close to the support plate 22, with the length direction of the slide rail 41 being parallel to that of the support legs 15. Correspondingly, the slider 42 is fixedly arranged on the side of each support plate 22 close to the support legs 15, and is slidably arranged on the slide rail 41. In a further embodiment, the slide rail 41 may be fixedly arranged on the side of the support plate 22 close to the support legs 15, and the slider 42 may be fixedly arranged on the side of the support legs 15 close to the support plate 22. It can be understood that, the slide rail 41 may be fixedly arranged on either the support plate 22 or one of the support legs 15, and correspondingly, the slider 42 may be fixedly arranged on the other one, as long as the slider 42 can be driven to move along the slide rail 41 simultaneously with the lifting and lowering movements of the loading platform 20.

Furthermore, the number of the second limiting assemblies 40 is the same as that of the first limiting assemblies 30, and the second limiting assemblies 40 are arranged at intervals around the base plate 21, with the second limiting assemblies 40 in one-to-one correspondence with the first limiting assemblies 30, to ensure that the two types of position-limiting structures are arranged in pairs on the loading platform 20 to improve the stability of the lifting and lowering movements of the loading platform 20. In the embodiment, the number of the second limiting assemblies 40 is four, and the slide rails 41 of the four second limiting assemblies 40 are connected to the support legs 15, respectively.

Furthermore, each of the second limiting assemblies 40 further comprises a mounting bracket 43. The mounting bracket 43 is connected to the support plate 22, and the slider 42 is arranged on the mounting bracket 43. The mounting bracket 43 is positioned between the slider 42 and the support plate 22, such that the slider 42 is fixedly arranged on the support plate 22 via the mounting bracket 43. The mounting bracket 43 is provided on the side of each support plate 22 that faces away from the other. The slide rail 41 is connected to the support frame 10. In the embodiment, the mounting bracket 43 comprises a connecting portion 45 and an extending portion 46 connected to the connecting portion 45. The connecting portion 45 is arranged perpendicular to the first direction. The connecting portion 45 has the elongated shape and is connected and secured to the support plate 22. Correspondingly, the connecting portion 45 is located at the top end of the mounting bracket 43. The extending portion 46 is arranged along the first direction. The extending portion 46 has the elongated shape and extends from the connecting portion 45 towards the support frame 10. The length direction of the extending portion 46 is perpendicular to that of the connecting portion 45, and the extending portion 46 is connected to the middle portion of the connecting portion 45. The mounting bracket 43 is T-shaped. Herein, the connecting portion 45 increases the bonding area between the mounting bracket 43 and the support plate 22, thereby ensuring the reliability of the connection therebetween. The extending portion 46 extends in a same direction as the slide rail 41. The extending portion 46, to which the slider 42 is fixed, increases the bonding area between the slider 42 and the slide rail 41 and thus enhances the stability of the loading platform 20 during the lifting and lowering movements.

Furthermore, the lifting member 50 is arranged along the first direction, with its driving direction perpendicular to the base plate 21. The lifting member 50 is mounted on the side of the base plate 21 away from the material belt 23 and is connected to the center portion of the base plate 21. The lifting member 50 is configured to drive the lifting and lowering movements of the loading platform 20. In the embodiment, the lifting member 50 may be a pneumatic or hydraulic cylinder.

The working process of the disclosure is as follows. The materials to be redirected are transferred from an external conveyor belt to a position above the loading platform 20. The loading platform 20 is lifted by the lifting member 50 to lift the materials above it, and continues to move upwards until the loading platform 20 reaches the height aligned with the conveyor belt in the changed direction. The material belt 23 is controlled by the driving member 24 to rotate and convey the materials to the conveyor belt in the other direction, thereby achieving redirection conveying operation of the materials.

The technical features of the above embodiments can be combined in any form, which are omitted for the purpose of simplicity. The invention is intended to cover all combinations provided that there is no contradiction.

All the above are merely some embodiments of the application. Though described concretely in detail, the above embodiments merely illustrate some implementations of the application, which should not be regarded as a limitation to the application. It should be noted that those skilled in the art may obtain several equivalents and modifications without departing from the concept of the application. The application is intended to cover such equivalents and modifications. Therefore, the scope of the application is defined by the appended claims.

## Claims

1. A transfer device (100), comprising:
a support frame (10);
a loading platform (20), comprising a base plate (21), a support plate (22) connected to the base plate (21), a material belt (23) provided on the support plate (22), and a driving member (24) connected to the material belt (23), wherein the driving member (24) is configured to drive the material belt (23) to rotate relative to the support plate (22), and the support plate (22) is moveably arranged on the support frame (10) in such a manner that the loading platform (20) is moveable in a first direction relative to the support frame (10);
a first limiting assembly (30), comprising a sleeve (31) fixedly arranged on the base plate (21) and a limit post (32) extending through the sleeve (31), wherein the sleeve (31) is slidably arranged on the limit post (32) to limit a movement of the loading platform (20) relative to the support frame (10);
a second limiting assembly (40), comprising a slide rail (41) and a slider (42) slidably arranged on the slide rail (41), wherein the slide rail (41) is parallel to the limit post (32), the slide rail (41) is provided on either one of the support frame (10) and the support plate (22), and the other one of the support frame (10) and the support plate (22) is connected to the slider (42), such that the slide rail (41) and the slider (42) constrain a movement path of the support plate (22) relative to the support frame (10); and
a lifting member (50), connected to the base plate (21), wherein the lifting member (50) is arranged along the first direction and is configured to drive the loading platform (20) to move relative to the support frame (10) in the first direction.

2. The transfer device (100) according to claim 1, wherein the second limiting assembly (40) further comprises a mounting bracket (43), the mounting bracket (43) is connected to the support plate (22), and the slider (42) is connected and secured to the support plate (22) via the mounting bracket (43).

3. The transfer device (100) according to claim 2, wherein the mounting bracket (43) further comprises a connecting portion (45) and an extending portion (46) connected to the connecting portion (45); the connecting portion (45) has an elongated shape and is connected to the support plate (22), the extending portion (46) has an elongated shape and extends from the connecting portion (45) towards the support frame (10), a length direction of the extending portion (46) is perpendicular to a length direction of the connecting portion (45), and the mounting bracket (43) is T-shaped.

4. The transfer device (100) according to claim 1, wherein the base plate (21) is shaped as a straight plate, a number of the support plates (22) is two, the two support plates (22) are arranged side by side on two sides of the base plate (21) perpendicular to the first direction, the support plates (22) are perpendicular to the base plate (21), and the material belt (23) is mounted at an end of the support plate (22) away from the base plate (21).

5. The transfer device (100) according to claim 4, wherein at least two first limiting assemblies (30) are provided, which are arranged at an interval along a direction of an extension plane of the base plate (21); a number of the second limiting assemblies (40) is the same as a number of the first limiting assemblies (30), and the second limiting assemblies (40) are arranged at intervals around the base plate (21).

6. The transfer device (100) according to claim 5, wherein the base plate (21) is rectangular-shaped, a number of the first limiting assemblies (30) is four, the four first limiting assemblies (30) are respectively correspondingly disposed at four corners of the base plate (21) and arranged in a rectangular array.

7. The transfer device (100) according to claim 4, wherein the support frame (10) comprises supports (11) arranged oppositely on two sides of the loading platform (20), and a crossbeam (12) connected to adjacent supports (11), and the supports (11) are arranged in parallel to the support plate (22).

8. The transfer device (100) according to claim 7, wherein the crossbeam (12) has an elongated shape and has two ends respectively connected and secured to the supports (11) provided on the two sides.

9. The transfer device (100) according to claim 7, wherein the supports (11) comprise support legs (15) arranged oppositely on two sides and ribs (16) connected to the support legs (15) on the two sides, the support legs (15) have an elongated shape, the ribs (16) have an elongated shape and are disposed between the support legs (15) on the two sides, and a length direction of the ribs (16) is perpendicular to a length direction of the support legs (15).

10. The transfer device (100) according to claim 9, wherein the slide rail (41) has an elongated shape and is fixedly arranged on a side of the support legs (15) close to the support plate (22), with a length direction of the slide rail (41) being parallel to the length direction of the support legs (15).

11. The transfer device (100) according to claim 9, wherein the support frame (10) further comprises support feet (13), which are sleeved on outer sides of the support legs (15), respectively, and the support feet (13) are moveable relative to the support legs (15), respectively, to allow adjustment of depths of the support legs (15) inserted in the support feet (13).

12. The transfer device (100) according to claim 11, wherein the support feet (13) are arranged at bottom ends of the support legs (15) and are connected and secured to external construction site ground, the support feet (13) and the support legs (15) are respectively fixedly connected by bolts, and heights of the supports (11) are adjustable by adjusting relative positions between the support feet (13) and the support legs (15).

13. The transfer device (100) according to claim 1, wherein a driving direction of the lifting member (50) is perpendicular to the base plate (21), the lifting member (50) is mounted on a side of the base plate (21) away from the material belt (23) and is connected to a center portion of the base plate (21).

14. The transfer device (100) according to claim 13, wherein the lifting member (50) is a pneumatic or hydraulic cylinder.

15. The transfer device (100) according to claim 1, wherein the driving member (24) is a motor, which is provided with an output shaft passing through the support plates (22) on the two sides and connected to both of the material belts (23) on the two sides.
